# EUROPEAN PATENT APPLICATION

(11) **EP 0 855 329 A1**
(43) Date of publication of application: **29.07.1998**
(21) Application number: 98100994.7
(22) Date of filing: 21.01.1998
(51) Int. Cl.: B62B 3/02

(54) **Shopping cart**

(30) Priority: 23.01.1997 IL 12006697
(71) Applicant: Cohen, Abraham, Ashdod (IL)
(72) Inventor: Cohen, Abraham, Ashdod (IL)
(74) Representative: VOSSIUS & PARTNER

(57) **Abstract**

A cart comprising:
a body (12) defining a volume for placing objects therein;
a plurality of support legs (14) underneath said body, said set of support legs being provided with wheels (18) to enable rolling transportation of said body along a horizontal surface;
at least one ancillary leg (22) underneath said body and provided with a wheel, said at least one ancillary leg (22) being located closer towards an end of said body and protruding from an underside of said body a smaller distance than at least two of said support legs, said at least one ancillary leg and said at least two of said support legs defining a plane angled with respect to said horizontal surface along which said cart may be rolled.

## Description

### FIELD OF THE INVENTION

The present invention relates to generally to carts for transportation, and particularly to carts placeable and transportable in a vehicle for transporting goods to and from places, such as stores or places of abode.

### BACKGROUND OF THE INVENTION

Groceries or other items purchased at a store must be transported by the purchaser to some other place, such as home. In general, the groceries are placed in bags and/or shopping carts, and lugged and/or wheeled to a vehicle in a parking lot. The purchaser must then hoist the bags or groceries from the shopping cart into the trunk of the vehicle, and then later once again hoist the items out of the trunk at home. This is often a tedious and strenuous chore, especially for the elderly.

### SUMMARY OF THE INVENTION

The present invention seeks to provide an improved cart which can be used to transport groceries and the like into/from points of purchase, into/from a vehicle and into/from designation points. The cart may be wheeled just like a shopping cart at the store and may then be conveniently wheeled up a ramp into a trunk of a vehicle and transported to a desired designation point while inside the trunk.

The cart of the present invention provides a fast, convenient and readily available means of transportation of goods. Using the cart saves physical effort of lugging packages and cuts down on the need for carrying items in bags. Implementation of the present invention reduces the use of ordinary shopping carts and the attendant problems of shopping cart theft prevention and need for personnel to gather stray shopping carts.

There is thus provided in accordance with a preferred embodiment of the present invention, a cart including a body defining a volume for placing objects therein, a plurality of support legs underneath the body, the set of support legs being provided with wheels to enable rolling transportation of the body along a horizontal surface, at least one ancillary leg underneath the body and provided with a wheel, the at least one ancillary leg being located closer towards an end of the body and protruding from an underside of the body a smaller distance than at least two of the support legs, the at least one ancillary leg and the at least two of the support legs defining a plane angled with respect to the horizontal surface along which the cart may be rolled.

In accordance with a preferred embodiment of the present invention, the at least one ancillary leg and/or support legs are fixed to an underside of the body. Alternatively, the support legs may be fixed to a trolley that supports an underside of the body. Preferably at least one of the wheels includes a caster wheel.

Additionally in accordance with a preferred embodiment of the present invention, at least one of the support legs and ancillary leg or legs may be retracted towards an underside of the body.

Further in accordance with a preferred embodiment of the present invention, a ramp is provided for rolling the cart thereon.

### BRIEF DESCRIPTION OF THE DRAWINGS

The present invention will be understood and appreciated more fully from the following detailed description, taken in conjunction with the drawings in which:
Fig. 1 is a simplified pictorial illustration of a cart constructed and operative in accordance with a preferred embodiment of the present invention;
Fig. 2 is a simplified pictorial illustration of rolling the cart of Fig. 1 up a ramp into a trunk of a vehicle in accordance with a preferred embodiment of the present invention;
Fig. 3 is a simplified rear view illustration of the cart of Fig. 1 in the trunk;
Fig. 4 is a simplified pictorial illustration of a cart constructed and operative in accordance with another preferred embodiment of the present invention;
Fig. 5 is a simplified pictorial illustration of the cart of Fig. 4 with legs retracted to an underside of a body of the cart;
Fig. 6 is a simplified pictorial illustration of a cart constructed and operative in accordance with yet another preferred embodiment of the present invention;
Fig. 7 is a simplified pictorial illustration of the cart of Fig. 6 engaging with guide members;
Fig. 8 is a simplified pictorial illustration of the cart of Fig. 6 fully positioned on a bed of a trunk of a vehicle; and
Fig. 9 is a simplified pictorial illustration of a trolley used with the cart of Fig. 6.

### DETAILED DESCRIPTION OF A PREFERRED EMBODIMENT

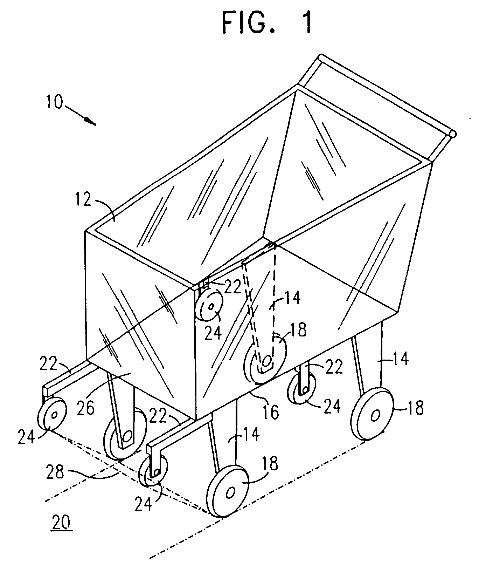

Reference is now made to Fig. 1 which illustrates a cart 10, constructed and operative in accordance with a preferred embodiment of the present invention. Cart 10 preferably includes a body 12 defining a volume for placing therein objects, such as groceries and the like. Body 12 may be fabricated from a variety of materials, such as metal or plastic, and its size and shape may be adapted to the objects to be contained therein.

A plurality of support legs 14, typically four as shown, are preferably fixed to an underside 16 of body 12, each being provided with a wheel 18. Wheels 18 are preferably caster wheels that enable rolling body 12 along a horizontal surface 20.

At least one ancillary leg 22, typically four as shown, is preferably fixed to underside 16 of body 12 and provided with a wheel 24. As seen in Fig. 1, each pair of ancillary legs 22 is located closer towards an end 26 of body 12 than a corresponding pair of support legs 14. Moreover, ancillary legs 22 are shorter than support legs 14, i.e., ancillary legs 22 protrude from underside 16 a smaller distance than support legs 14. Ancillary legs 22 and support legs 14 define a plane 28 angled with respect to horizontal surface 20 along which cart 10 may be rolled.

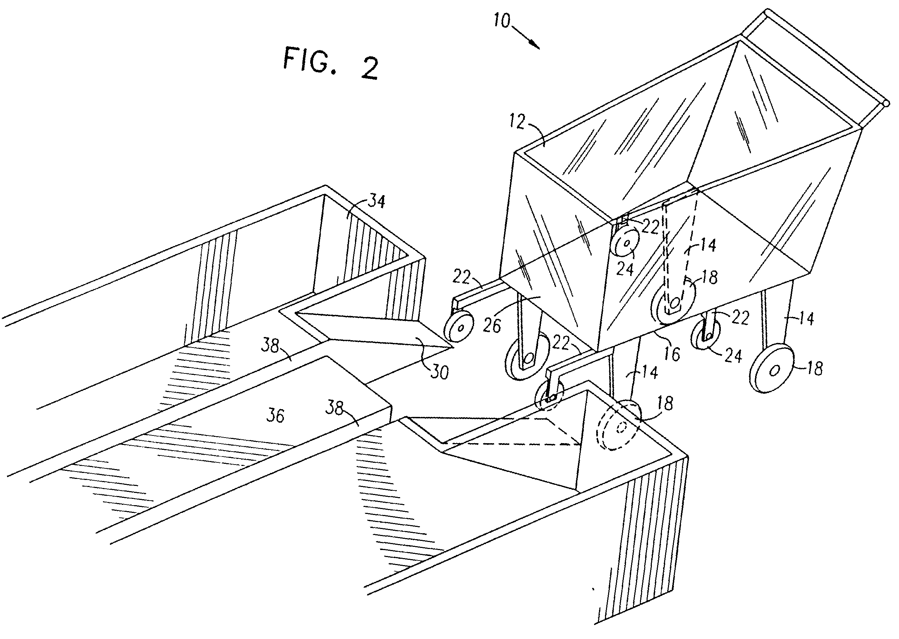

Reference is now made to Fig. 2 which illustrates rolling cart 10 up a ramp 30 into an openable and closeable enclosure, such as a trunk 32 of a vehicle 34, in accordance with a preferred embodiment of the present invention. Ramp 30 may be manufactured separately from vehicle 34 and attached thereto. Alternatively, vehicle 34 may be manufactured with ramp 30 as an integral part thereof Ramp 30 is preferably angled with to respect to the horizontal to correspond with the angle of plane 28, so that wheels 24 of legs 22 roll up ramp 30 followed by wheels 18 of legs 14. A bed 36 of trunk 32 is preferably formed with tracks 38 to receive and guide therein wheels 18 and 24 of legs 14 and 22, respectively.

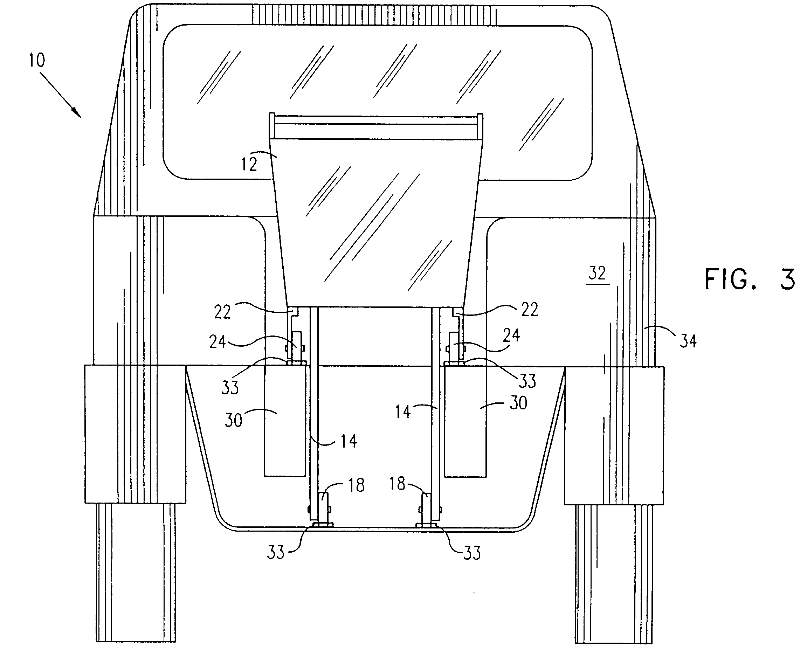

Fig. 3 is a simplified rear view illustration of cart 10 fully placed in trunk 32. Stop members 33 may be provided for fixedly holding cart 10 in place. It is appreciated that once cart 10 is in trunk 32, vehicle 34 may be used to transport cart 10 and its contents to a designation point at which cart 10 may be rolled out of trunk 32 via ramp 30 and wheeled to a point for unloading the contents therefrom. It is appreciated that ramp 30 may be partially or fully retracted from trunk 32 as needed in order to facilitate moving cart 10 in and out of trunk 32. Depending on the position of ramp 30 with respect to trunk 32, not all of wheels 18 and 24 may need to roll along ramp 30.

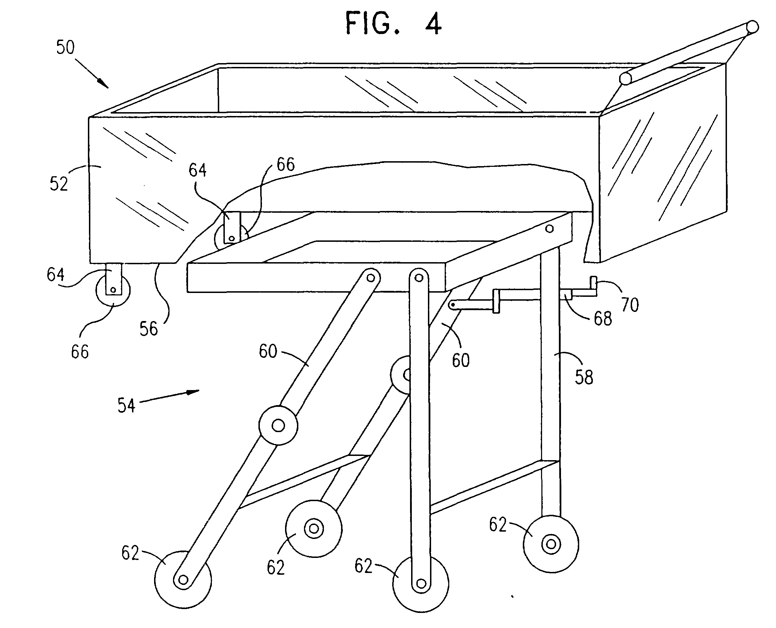

Reference is now made to Fig. 4 which illustrates a cart 50 constructed and operative in accordance with another preferred embodiment of the present invention. Cart 50 preferably includes a body 52 defining a volume for placing therein objects, such as groceries and the like. A trolley 54 is provided that supports an underside 56 of body 52. Trolley 54 is preferably an "ambulance" type of trolley used with stretchers, and as such includes a collapsible or retractable frame 58 with support legs 60. Wheels 62, preferably caster wheels, are attached to legs 60.

At least one ancillary leg 64, typically two as shown, is preferably fixed to underside 56 of body 52 and provided with a wheel 66. A collapsing mechanism 68 with a handle 70 is preferably provided for selective collapsing and retracting of frame 58 and legs 60. Collapsing mechanism 68 is preferably any conventional, readily available device used for collapsing legs of ambulance type trolleys and is well known to those skilled in the art.

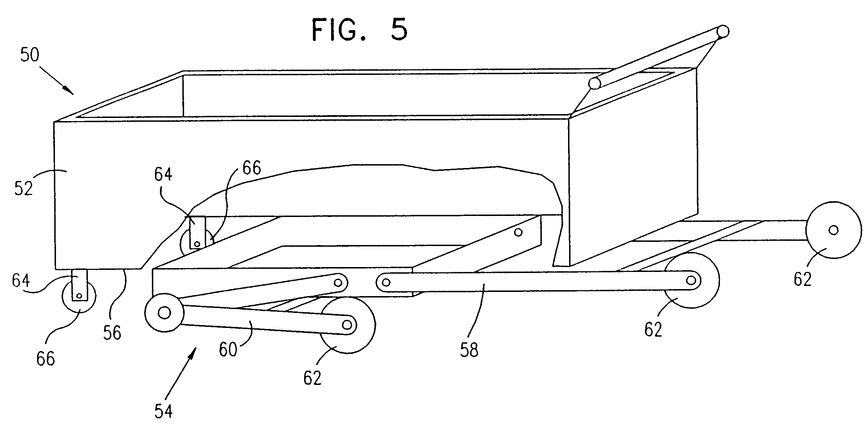

Reference is now made to Fig. 5 which illustrates cart 50 with frame 58 and legs 60 collapsed and retracted to underside 56 of body 52. As described hereinabove for cart 10, cart 50 may be used to transport items to and from a vehicle. Body 52 may be detached from trolley 54 and then trolley 54 may be subsequently collapsed, and both body 52 and trolley 54 may be placed in the trunk of a vehicle (not shown) for transportation thereof Alternatively, body 52 may remain fixed to trolley 54. It is appreciated that depending on the height of the trunk and trolley 54, a ramp such as ramp 30 may be used to assist wheeling cart 50 into and out of the trunk. Wheel or wheels 66 may also be used to assist wheeling cart 50 on inclined surfaces, if necessary.

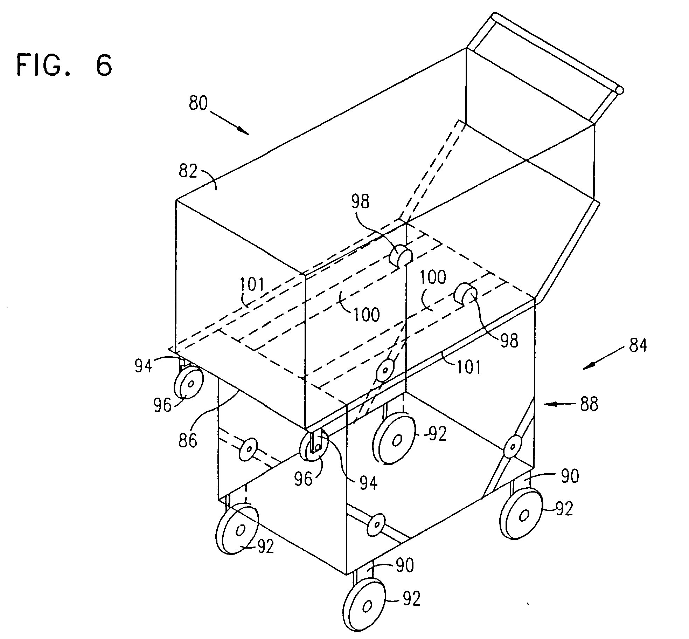

Reference is now made to Fig. 6 which illustrates a cart 80, constructed and operative in accordance with yet another preferred embodiment of the present invention. Cart 80 preferably includes a body 82 defining a volume for placing therein objects, such as groceries and the like. A trolley 84 is provided that supports an underside 86 of body 82. Trolley 84 preferably includes a collapsible or retractable frame 88 with support legs 90. Wheels 92, preferably caster wheels, are attached to legs 90.

At least one ancillary leg 94, typically two as shown, is preferably fixed to underside 86 of body 82 and provided with a wheel 96. Body 82 is preferably slidingly attached to trolley 84 by means of a pair of rollers 98 which slide along a pair of tracks 100 located on a top portion of trolley 84. Body 82 is preferably further provided with a pair of longitudinal outer rails 101 along opposite sides of underside 86.

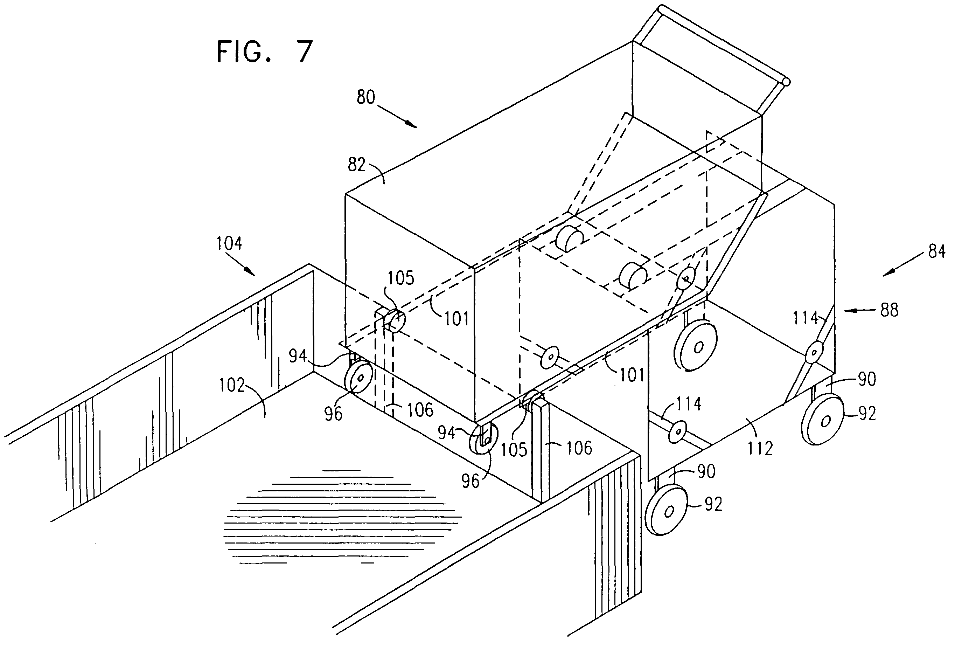

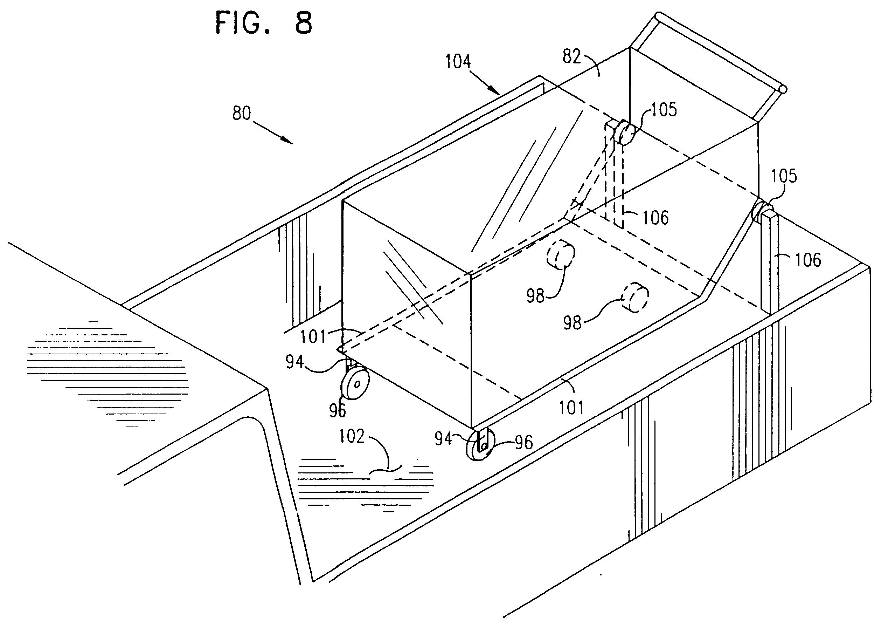

As described hereinabove for carts 10 and 50, cart 80 may be used to transport items to and from a vehicle. Reference is now made to Fig. 7 which illustrates cart 80 brought to a trunk 102 of a vehicle 104. Body 82 may be slid along tracks 100 so that rails 101 are brought in engagement with a pair of guide rollers 105, each disposed on top of a guide member 106 fixedly attached to a bed of trunk 102. Body 82 may then be further pushed along tracks 100 and guide rollers 105 until body 82 is fully positioned on the bed of trunk 102, as seen in Fig. 8.

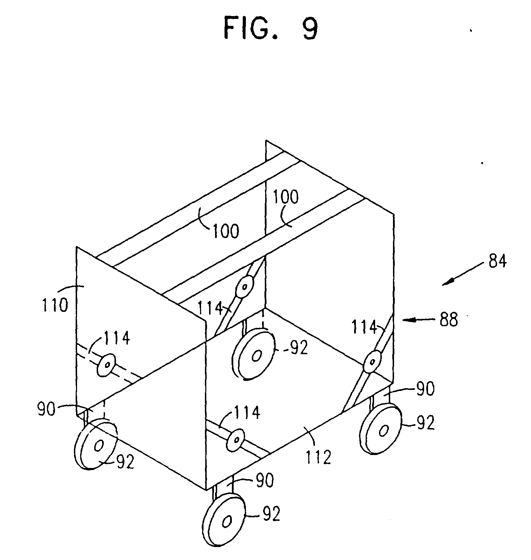

Reference is now made to Fig. 9 which illustrates trolley 84 with body 82 removed therefrom. Trolley 84 can be conveniently folded for storage or transportation thereof as is now described. Trolley 84 is preferably provided with a pair of folding end faces 110 attached to a bottom plate 112 by means of a plurality of hinges 114. After detaching tracks 100 from end faces 110, end faces may be folded down towards bottom plate 112 by folding hinges 114.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the present invention is defined only by the claims which follow:

## Claims

1. A cart comprising:
a body defining a volume for placing objects therein;
a plurality of support legs underneath said body, said set of support legs being provided with wheels to enable rolling transportation of said body along a horizontal surface;
at least one ancillary leg underneath said body and provided with a wheel, said at least one ancillary leg being located closer towards an end of said body and protruding from an underside of said body a smaller distance than at least two of said support legs, said at least one ancillary leg and said at least two of said support legs defining a plane angled with respect to said horizontal surface along which said cart may be rolled.

2. A cart according to claim 1 wherein said at least one ancillary leg is fixed to an underside of said body.

3. A cart according to claim 1 or claim 2 wherein said support legs are fixed to an underside of said body.

4. A cart according to claim 1 or claim 2 wherein said support legs are fixed to a trolley that supports an underside of said body.

5. A cart according to claim 4 wherein said trolley comprises a track for sliding said body therealong.

6. A cart according to any of the preceding claims wherein at least one of said wheels comprises a caster wheel.

7. A cart according to any of the preceding claims wherein at least one of said support legs and said at least one ancillary leg may be retracted towards an underside of said body.

8. A cart according to any of the preceding claims and comprising a ramp for rolling said cart thereon.

9. A vehicle storage compartment comprising:
a body defining a volume for placing objects therein;
a plurality of support legs underneath said body, said set of support legs being provided with wheels to enable rolling transportation of said body along a horizontal surface;
at least one ancillary leg underneath said body and provided with a wheel, said at least one ancillary leg being located closer towards an end of said body and protruding from an underside of said body a smaller distance than at least two of said support legs, said at least one ancillary leg and said at least two of said support legs defining a plane angled with respect to said horizontal surface along which said wheels may be rolled;
an openable and closeable enclosure located in a portion of a vehicle; and
a mounting structure assembled in said enclosure and comprising at least one support member for supporting and fixing said body.

10. A compartment according to claim 9 and comprising a ramp for rolling said wheels thereon.

11. Apparatus according to any of claims 1 - 10 and substantially as shown and described above.

12. Apparatus according to any of claims 1 - 10 and substantially as illustrated in any of the drawings.
